# EUROPÄISCHE PATENTSCHRIFT

(11) **EP 3 681 356 B1**
(45) Veröffentlichungstag und Bekanntmachung des Hinweises auf die Patenterteilung: **01.11.2023**
(21) Anmeldenummer: 18782885.0
(22) Anmeldetag: 17.09.2018
(51) Int. Cl.: A47J 37/07

(54) **FEUERSCHALE**
FIRE BASIN
FOYER

(30) Priorität: 17.09.2017 DE 202017004811 U
(43) Veröffentlichungstag der Anmeldung: 22.07.2020
(73) Patentinhaber: Kaiser, Thomas, 87463 Schrattenbach (DE); Wassermann, Christian, 87647 Kraftisried (DE)
(72) Erfinder: Kaiser, Thomas, 87463 Schrattenbach (DE); Wassermann, Christian, 87647 Kraftisried (DE)
(74) Vertreter: Gille Hrabal Partnerschaftsgesellschaft mbB Patentanwälte
(86) Internationale Anmeldenummer: PCT/EP2018/000433
(87) Internationale Veröffentlichungsnummer: WO 2019/052684

(56) Entgegenhaltungen:
- DE-A1- 1 805 206
- DE-U1-202008 007 749
- KR-A- 20170 017 153
- US-A1- 2011 162 634

## Beschreibung

Die Erfindung betrifft eine Feuerschale zur Verbrennung von Holz und ähnlichen Brennstoffen, und ein Verfahren zur Herstellung einer Feuerschale.

Derartige Feuerschalen werden im Außenbereich (Garten, Terrasse, usw.) in Art eines mobilen Lagerfeuers eingesetzt. So ist aus der DE 20 2008 007 749 U1 eine Feuerschale bekannt, an der drei Standfüße als Gestell angeschraubt werden können. Die wannenförmige Feuerschale besteht aus mehreren Blechsegmenten, die je an einer Randkante eine Überlappung aufweisen, um die Segmente zusammenzuschrauben (bei drei Segmenten sind hierzu sechs Schrauben gezeigt). Dies ist relativ beschwerlich und nicht sonderlich stabil. Obwohl die Segmente aus Metallblech bestehen und gemäß dem dortigen Anspruch 6 zu einem halb hohlkugelförmigen Behälter verbunden sind, ist die Stabilität gerade im Bereich der Schraublöcher gering und der Zusammenbau der Segmente gestaltet sich recht mühsam. Dies gilt auch für den Abbau der Feuerschale, z. B. nach Ende einer Gartenparty am nächsten Tage, um diese mit dem Pkw nach Hause zu transportieren, da die Segmente aus relativ dickem Metallblech relativ schwer sind. Diese Blechstärke ist wegen der Hitzebelastung in der Feuerschale oft auch nötig, um Verzug oder Ausbeulungen der relativ großen Segmentflächen entgegenzuwirken. Der Einsatz von dünnwandigen Blechen ist somit bislang kaum möglich, außer dass die Segmentanzahl erhöht wird, was jedoch den Montageaufwand wieder entsprechend erhöht.

Eine Feuerschale bestehend aus einem Behälter und daran angeordneten Standfüßen, wobei der Behälter aus miteinander verbindbaren Behältersegmenten besteht, ist aus der Druckschrift DE 20 2008 007 749 U1 bekannt. Die Druckschrift DE-OS 1805 206 offenbart einen Freiluftkamin mit einer Haube, die vier Plattenteile umfasst. Die Druckschrift KR 2017 0017153 A offenbart einen aus drei Platten bestehenden Camping-Ofen. Die Druckschrift US 2011/162634 A1 beschreibt einen Tisch, der vier Segmente und einen Behälter für ein Entzünden eines Feuers umfasst.

Eine Feuerschale soll hinsichtlich Stabilität und Handhabung verbessert werden.Diese Aufgabe wird gelöst durch die Merkmale der Ansprüche 1 und 12. Vorteilhafte Ausführungen sind Gegenstand der Unteransprüche.

Die vorgeschlagene Feuerschale kann preisgünstig und stabil, insbesondere aus dünnwandigem Stahlblech hergestellt werden und ist, mit entsprechenden Zubehörteilen, auch als Grill im Freien einsetzbar. Durch die integrale Ausführung der Segmentflächen mit zusätzlichen Vertiefungen bzw. Einmuldungen an den bevorzugt drei Segmenten der Feuerschale wird die Stabilität erheblich gesteigert. Die Gestellteile können dabei durch einfache Abkantungen in Dreiecksform aus Stahlblech (dem Zuschnitt) hergestellt werden. Ausgehend von solch einem Blechzuschnitt (d. h. in flacher Form) können zur Stabilisierung der Feuerschalenwand auch sich kreuzende Kantungen vorgenommen werden, so dass jede Segmentfläche in sich eine leicht konkave Muldenform aufweist. Um diese "Vertiefung" zu erzielen, ist im Blechzuschnitt ein Keil ausgeschnitten, wobei sich im Zentrumsbereich eine Vorspannung ergibt. Durch einfaches Einhaken von benachbarten Nasen im Zentrumsbereich lassen sich die Segmente so formschlüssig verankern.

Durch die genannten Kantungen an den Segmentflächen wird die Feuerschale in Art eines Klöpperbodens ausgesteift und die einzelnen Segmentflächen sind in sich formstabil in Sinne einer erhöhten Beulstabilität. Somit kann die Feuerschale aus dünneren Blechen geformt werden und kann damit leicht auf- und zum Transport auch wieder abgebaut werden. Die einzelnen Segmente (bevorzugt drei pro Feuerschale, wobei auch zwei oder vier oder mehr Segmente möglich sind) weisen somit durch die Abkantungen ein relativ geringes Gewicht auf, die einfach miteinander verschraubt (oder auf sonstige Weise miteinander verbunden) werden können, z. B. auch mit Bajonett-, Knebel- oder Schnellverschlüssen, um den Aufbau bzw. Abbau der Feuerschale zum Weitertransport zu beschleunigen. Da diese Schrauben oder Schnellverschlüssen außerhalb des direkten Brennbereichs liegen, werden diese nicht verschmutzt und sind leicht zu handhaben. Zudem können für den Grillbetrieb auch höhere Stützfüße an der Feuerschale angeschraubt werden, die einfach nach innen schwenkbar sind, wenn die niedrigere Position als reine Feuerschale gewünscht wird. Schließlich werden die Herstellkosten erheblich gesenkt, da die (wenigen) Segmente bevorzugt mit einer einfachen Presse oder Abkantbank hergestellt werden können (auch in unterschiedlichen Größen). Das als Zuschnitt verwendete "Dünnblech" lässt sich zudem mit niedrigem Energieaufwand umformen, insbesondere für die genannten konkaven Vertiefungen der Segmentflächen, so dass sich gegenüber der (geometrisch plan) aufgespannten Fläche durch den allgemein als "Drücken" bezeichneten Umformprozess entsprechende Strukturprofile in Form von Einmuldungen ergeben, welche die Formfestigkeit und Beulsicherheit erhöhen, wie dies aus sog. Membranbauwerken an sich bekannt ist.

Für den Transport (ggf. auch zur Reinigung) kann die Feuerschale in die Segmente zerlegt werden, so dass die Einzelteile z. B. in einen Pkw-Kofferraum passen. Da die Zahl der Einzelteile trotz der Segmentbauweise relativ gering ist, kann dies schnell erfolgen. Zudem können diese Einzelteile kaum verloren gehen bzw. müssen beim (erneuten) Zusammenbau der Feuerschale nicht lange gesucht werden. Somit wird eine rasche Befeuerung erzielt, die auch für Grillzwecke einsetzbar ist. So können am Rand der Feuerschale ein Grillrost oder eine Tischplatte an- bzw. eingesetzt werden, insbesondere für Speisen oder Grillzubehör.

Weitere Vorteile der Erfindung ergeben sich aus der nachfolgenden Beschreibung eines Ausführungsbeispiels anhand der Zeichnungen. Hierbei zeigen:
Fig. 1 eine perspektivische Darstellung einer Feuerschale in Betriebsstellung,
Fig. 2 eine Draufsicht auf die Feuerschale gemäß Fig. 1,
Fig. 3 eine Flachansicht eines Blechzuschnitts für ein Feuerschalen-Segment, und
Fig. 4 eine Perspektivansicht des Zentralbereichs der Feuerschale.

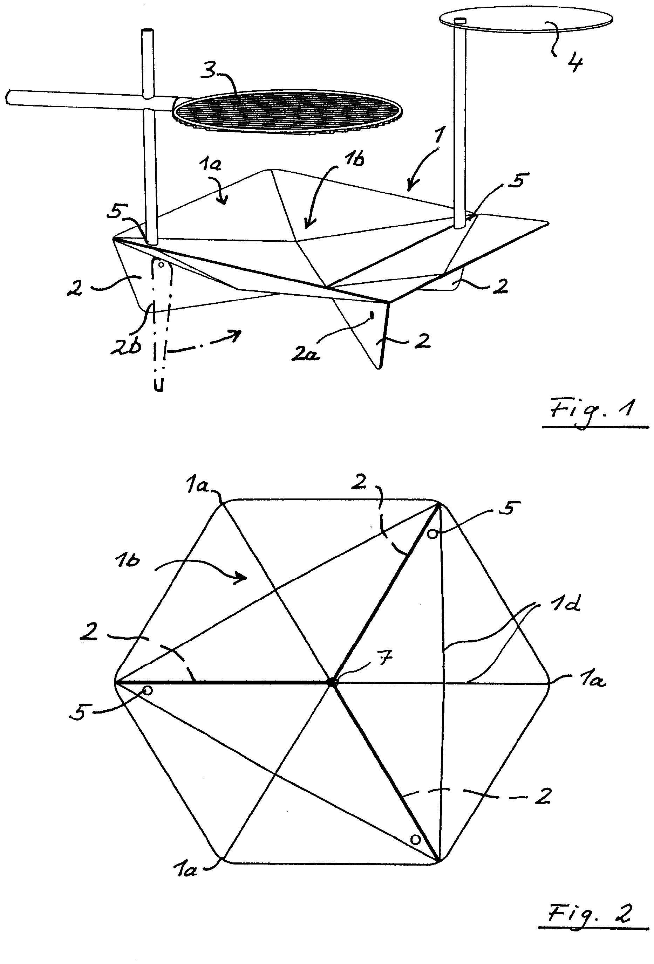

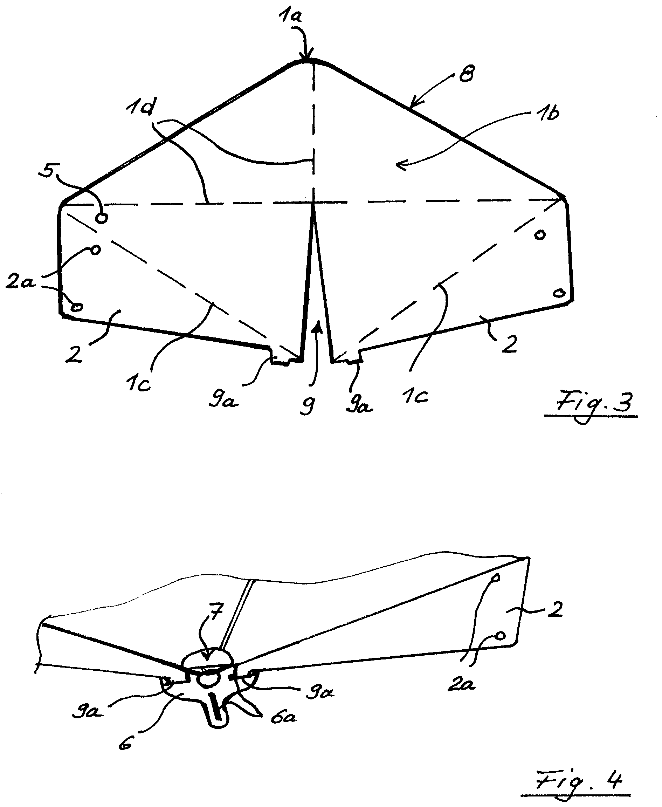

Fig. 1 zeigt eine Feuerschale 1 für Holz oder ähnliche Brennstoffe (wie z. B. Grillkohle) und besteht hier aus drei, jeweils gleichen Segmenten 1a, die mit einem Zentrumswinkel von 120° aneinander gefügt sind, um so eine nach unten geschlossene Wanne zu formen. Diese Feuerschale 1 aus hier drei Segmenten 1a ist mit ihren (drei) Segmentflächen 1b über (drei) Füße 2 auf dem Boden abgestützt, die zusammen mit den Segmenten 1a einteilig aus Blechzuschnitten 8 (vgl. Fig. 3) gebildet sind, nämlich bevorzugt in Dreiecksform durch entsprechende Abkantungen (entlang der Abkantlinien 1c des Blechzuschnitts 8 in Fig. 3).

Dies kann in einfacher Weise auf einer Abkantbank erfolgen, so dass keine gesonderten Stützfüße gefertigt werden müssen. Durch diese "integrierte" Bauweise wird auch die Stabilität der Feuerschale 1 erhöht, so dass daran auch Grillzubehör, insbesondere ein Grillrost 3 und/oder eine Tischplatte 4 befestigt werden kann. In einfacher Weise erfolgt dies mit Einstecköffnungen als Befestigungen 5 am jeweiligen Segment 1a (vgl. Fig. 2 im Randbereich), die beim Zuschnitt (vgl. Fig. 3) eingearbeitet werden. Dies kann neben Ausstanzen auch durch Laserschneiden oder Wasserstrahlschneiden erfolgen. Für den Grillbetrieb können auch für eine angenehmere Arbeitshöhe strichpunktiert angedeutete Stützfüße 2b befestigt werden, die in einfacher Weise nach innen hin zum Zentrum der Feuerschale 1 unter diese einklappbar sind.

Die Verbindung der (drei) Segmente 1a und damit Bildung der Feuerschale 1 mit hier drei nach oben weisenden Segmentflächen 1b erfolgt bevorzugt an den aufrecht stehenden Fußteilen, nämlich mittels jeweils wenigstens einer Lochung 2a, in die z. B. Schrauben eingesteckt werden können, aber bevorzugt Schnellverschlüsse eingesetzt werden, um den Auf- bzw. Abbau der Feuerschale 1 zu beschleunigen. Insbesondere sind solche Schnellverschlüsse (wie Bajonett- oder Knebelbefestigungen) unverlierbar an den Füßen 2 angebracht. Diese Verbindung an je zwei sich gegenüberliegenden Fußteilen zu einem Fuß 2 hat den Vorteil, dass dieser Fußbereich vom Feuer bzw. Ruß kaum verschmutzt wird und daher die Verschlüsse oder Schrauben leicht zu lösen sind. Dies gilt auch für die als Zubehör ggf. vorgesehenen Stützfüße 2d, die an der jeweils oberen Lochung 2a auch mit Schnellverschlüssen montiert werden können, und in der ausgeklappten Tragstellung etwas nach außen stehen, um so eine stabile Übertotpunkt-Verankerung zu bilden.

Wie in Fig. 2 in Draufsicht dargestellt, weist jedes Segment 1a (hier ist die jeweils äußere Ecke mit diesem Bezugszeichen versehen) der Feuerschale 1 sich kreuzende Kantungen 1d auf, die sich jeweils im mittleren Bereich der hier drei Segmentflächen 1b schneiden. Hierdurch weist die in Draufsicht rautenförmige Oberfläche jeder Segmentfläche 1b eine zusätzliche, konkave Vertiefung auf, so dass sich deren Formstabilität und Beulsicherheit erhöht. Die Füße 2 sind hier in Draufsicht verdeckt, aber in dickeren Linien angedeutet, da diese jeweils aus zwei Fußteilen gebildet sind, wie anhand der Lochungen 2a beschrieben.

In Fig. 3 ist ein flach ausgebreiteter Blech-Zuschnitt 8 für ein Segment 1a der Feuerschale 1 gezeigt. Dieser kann nach Zuschneiden des Umfangs, z. B. mit Laser oder Wasserstrahl auf einer Abkantmaschine mehrfach gekantet werden, nämlich entlang den Linien 1d zur Bildung der stabilisierenden Vertiefung (konkave Mulde) und entlang den Linien 1c, um die beiden Fußteile zu formen, die hier senkrecht zur Zeichenebene je um ca. 90° nach hinten gebogen werden, um dann beim Zusammenbau der Segmente 1a jeweils einen Fuß 2 zu bilden. Dabei werden auch die Lochungen 2a und Einstecköffnungen 5 eingebracht. Wesentlich für die Bildung der o.g. konkaven Vertiefung durch die sich kreuzenden Kantungen 1d ist, dass im (flachen) Blechzuschnitt 8 ein Keil 9 ausgeschnitten wird, so dass beim Zusammenführen der beiden Keilkanten das Blech im Zusammenspiel mit den Kantungen 1d "automatisch" in die gewünschte, konkave Form gedrückt wird.

Von Vorteil sind weiterhin zwei Nasen 9a, die an den (freigeschnittenen) Keil 9 angrenzen. Im gefalteten Zustand, also mit den dann aufrechten Fußteilen liegen die zwei Nasen 9a nebeneinander und können in ein im Zentrum der Feuerschale 1 angeordnetes Zentrierteil 6 eingesteckt werden, wie in Fig. 4 schematisch dargestellt. Das sternförmige Zentrierteil 6 weist hierzu mehrere Radialschlitze 6a auf, deren Breite genau (oder etwas mehr als) der Blechstärke des Blechzuschnitts 8 entspricht. So werden die Segmente 1a im Zentralbereich der Feuerschale 1 formschlüssig verspannt und verankert. Bevorzugt kann über dem Zentrierteil 6 eine kleine Abdeckscheibe 7 (vgl. auch Fig. 2) vorgesehen sein, die auch mit den Zentrierteil 6 verschraubt oder verklammert sein kann, um die zentrumsnahen Spitzen der drei Segmente 1a abzudecken. Hierdurch können auch Fertigungstoleranzen ausgeglichen werden und sicher verhindert werden, dass Schmutz oder Glutreste aus dem tiefsten Bereich der Feuerschale 1 austreten kann.

Obwohl hier der Aufbau der Feuerschale 1 aus drei gleichen Segmenten 1a beschrieben wurde, ist auch eine andere Anzahl, z. B. aus vier Segmenten 1a, dann mit einem Zentrumswinkel von 90° möglich. Die Ausrichtung der Radialschlitze 6a zum Eingriff der Nasen 9a ist dann entsprechend angepasst, d.h. das Zentrierteil 6 würde vier Zacken aufweisen, wobei die Radialschlitze 6a um je 90° versetzt ausgerichtet wären.

## Patentansprüche

1. Feuerschale zur Verbrennung von Holz und ähnlichen Brennstoffen, bestehend aus mehreren Segmenten (1a), die mit Füßen auf dem Boden abgestützt sind und nach oben hin mehrere Segmentflächen (1b) zur Bildung der wannenförmigen Feuerschale aufweisen, **dadurch gekennzeichnet, dass**
eine jede Segmentfläche (1b) der Feuerschale (1) eine konkave Muldenform aufweist, wobei ausgehend von einem Blechzuschnitt, in dem ein Keil ausgeschnitten worden ist, zur Stabilisierung sich kreuzende Kantungen vorgenommen worden sind, so dass jede Segmentfläche in sich eine leicht konkave Muldenform aufweist.

2. Feuerschale nach dem vorhergehenden Anspruch, **dadurch gekennzeichnet, dass** die Kanten des Keils (9) zur Bildung der konkaven Mulde zusammengeführt sind.

3. Feuerschale nach dem vorhergehenden Anspruch, **dadurch gekennzeichnet, dass** die Füße (2) jeweils als dreiecksförmige Abkantungen (1c) des Blechs (8) gestaltet sind.

4. Feuerschale nach einem der vorhergehenden Ansprüche, **dadurch gekennzeichnet, dass** die konkave Muldenform durch einen Umformprozess und zwar durch Drücken hergestellt ist.

5. Feuerschale nach dem vorhergehenden Anspruch, **dadurch gekennzeichnet, dass** der Keil (9) mit seiner Spitze am Kreuzungspunkt der Kantungen (1d) endet.

6. Feuerschale nach einem der vorhergehenden Ansprüche, **dadurch gekennzeichnet, dass** die Verbindung der Segmente (1a) zur Feuerschale (1) an den Füßen (2) vorgesehen ist.

7. Feuerschale nach einem der vorhergehenden Ansprüche, **dadurch gekennzeichnet, dass** zur Verbindung der Segmente (1a) Schnellverschlüsse an Lochungen (2a) vorgesehen sind, die insbesondere unverlierbar an den Füßen (2) angebracht sind.

8. Feuerschale nach dem vorhergehenden Anspruch, **dadurch gekennzeichnet, dass** die Schnellverschlüsse als Bajonett- oder Knebelbefestigung gestaltet sind.

9. Feuerschale nach einem der vorhergehenden Ansprüche, **dadurch gekennzeichnet, dass** an der Feuerschale (1) Befestigungen (5) für Grillzubehör, insbesondere für einen Grillrost (3) und/oder für eine Tischplatte (4) vorgesehen sind.

10. Feuerschale nach dem vorhergehenden Anspruch, **dadurch gekennzeichnet, dass** die Befestigungen (5) als Einstecköffnungen am jeweiligen Segment (1a) ausgebildet sind.

11. Feuerschale nach einem der vorhergehenden Ansprüche, **dadurch gekennzeichnet, dass** die Segmente (1a) im Zentralbereich der Feuerschale (1) formschlüssig verspannt sind, bevorzugt an einem Zentrierteil (6) mit Radialschlitzen (6a) zum Eingriff von Nasen (9a).

12. Verfahren zur Herstellung einer Feuerschale nach einem der vorhergehenden Ansprüche, **dadurch gekennzeichnet, dass** die Herstellung eines jeden Segment (1a) umfasst, dass ein Blech (8) nach einem Zuschneiden des Umfangs auf einer Abkantmaschine entlang von Linien (1d) mehrfach zur Bildung einer stabilisierenden Mulde abgekantet wird, wobei ein Keil (9) aus dem Blech (8) so ausgeschnitten wird, dass durch Zusammenführen der Kanten des Keils (9) eine konkaven Mulde gebildet wird.

13. Verfahren nach dem vorhergehenden Anspruch, **dadurch gekennzeichnet, dass** das Blech auf der Abkantmaschine entlang von Linien (1c) zur Formung von Fußteilen abgekantet, wobei die Fußteile um ca. 90° so gebogen werden, dass diese beim Zusammenbau der Segmente (1a) jeweils einen Fuß bilden.

14. Verfahren nach einem der beiden vorhergehenden Ansprüche, **dadurch gekennzeichnet, dass** in das Blech (8) Lochungen (2a) und Einstecköffnungen (5) eingebracht werden.

## Claims

1. Fire bowl for the combustion of wood and similar fuels, consisting of a plurality of segments (1a), which are supported on the ground by feet and have a plurality of segment surfaces (1b) towards the top to form the trough-shaped fire bowl, **characterized in that**
each segment surface (1b) of the fire bowl (1) has a concave trough shape, wherein, starting from a sheet metal blank in which a wedge has been cut out, intersecting bends have been made for stabilization, so that each segment surface has in itself a slightly concave trough shape.

2. Fire bowl according to the preceding claim, **characterized in that** the edges of the wedge (9) are brought together to form the concave trough.

3. Fire bowl according to the preceding claim, **characterized in that** the feet (2) are each designed as triangular-shaped folds (1c) of the sheet (8).

4. Fire bowl according to one of the preceding claims, **characterized in that** the concave trough shape is produced by a forming process, namely by pressing.

5. Fire bowl according to the preceding claim, **characterized in that** the wedge (9) ends with its tip at the intersecting point of the bends (1d).

6. Fire bowl according to one of the preceding claims, **characterized in that** the connection of the segments (1a) to the fire bowl (1) is provided at the feet (2).

7. Fire bowl according to one of the preceding claims, **characterized in that** quick-release fasteners are provided at holes (2a) for connecting the segments (1a), which quick-release fasteners are in particular captively attached to the feet (2).

8. Fire bowl according to the preceding claim, **characterized in that** the quick-release fasteners are designed as bayonet or toggle fasteners.

9. Fire bowl according to one of the preceding claims, **characterized in that** fastenings (5) for grilling accessories, in particular for a grilling grate (3) and/or for a table top (4), are provided on the fire bowl (1).

10. Fire bowl according to the preceding claim, **characterized in that** the fastenings (5) are designed as insertion openings on the respective segment (1a).

11. Fire bowl according to one of the preceding claims, **characterized in that** the segments (1a) are positively clamped in the central area of the fire bowl (1), preferably on a centering part (6) with radial slots (6a) for engagement of lugs (9a).

12. Method for producing a fire bowl according to one of the preceding claims, **characterized in that** the producing of each segment (1a) comprises that a sheet metal (8), after cutting the circumference to size, is bent several times along lines (1d) on a folding machine to form a stabilizing trough, wherein a wedge (9) is cut out of the sheet metal (8) in such a way that a concave trough is formed by bringing the edges of the wedge (9) together.

13. Method according to the preceding claim, **characterized in that** the sheet is folded on the folding machine along lines (1c) for forming foot parts, wherein the foot parts are bent by approximately 90° so that they each form a foot when the segments (1a) are assembled.

14. Method according to one of the preceding claims, **characterized in that** holes (2a) and insertion openings (5) are made in the sheet metal (8).

## Revendications

1. Bol à feu pour la combustion de bois et de combustibles similaires, constituée de plusieurs segments (1a) qui sont appuis sur le sol par des pieds et qui présentent vers le haut plusieurs surfaces de segment (1b) pour former le bol à feu en forme de cuve, **caractérisée en ce que**
chaque surface de segment (1b) du bol à feu (1) présente une forme de cuvette concave, dans laquelle, partant d'une découpe de tôle dans laquelle une cale a été découpée pour la stabilisation, des plis se croisant ayant été réalisés, de sorte que chaque surface de segment présente en soi une forme de cuvette légèrement concave.

2. Bol à feu selon la revendication précédente, **caractérisé en ce que** les bords de la cale (9) sont réunis pour la formation de la cuvette concave.

3. Bol à feu selon la revendication précédente, **caractérisé en ce que** les pieds (2) sont chacun conçus en forme de pliages triangulaires (1c) de la tôle (8).

4. Bol à feu selon l'une des revendications précédentes, **caractérisé en ce que** la forme concave de la cuvette est obtenue par un processus de formage, à savoir par pression.

5. Bol à feu selon la revendication précédente, **caractérisé en ce que** la cale (9) se termine par sa pointe au point d'intersection des plis (1d).

6. Bol à feu selon l'une des revendications précédentes, **caractérisé en ce que** la liaison des segments (1a) au bol à feu (1) est prévue au niveau des pieds (2).

7. Bol à feu selon l'une des revendications précédentes, **caractérisé en ce que** des fermetures rapides sur des perforations (2a), qui sont notamment montées de manière imperdable sur les pieds (2), sont prévues pour la liaison des segments (1a).

8. Bol à feu selon la revendication précédente, **caractérisé en ce que** les fermetures rapides sont conçues comme des fixations à baïonnette ou à garrot.

9. Bol à feu selon l'une des revendications précédentes, **caractérisé en ce que** des fixations (5) sont prévues sur le bol à feu (1) pour des accessoires de gril, en particulier pour une grille de gril (3) et/ou pour une plaque de table (4).

10. Bol à feu selon la revendication précédente, **caractérisé en ce que** les fixations (5) sont conçues comme des ouvertures d'insertion sur le segment respectif (1a).

11. Bol à feu selon l'une des revendications précédentes, **caractérisé en ce que** les segments (la) sont tendus par complémentarité de forme dans la zone centrale du bol à feu (1), de préférence à une pièce de centrage (6) avec des fentes radiales (6a) pour l'engagement d'ergots (9a).

12. Procédé de fabrication d'un bol à feu selon l'une des revendications précédentes, **caractérisé en ce que** la fabrication de chaque segment (1a) comprend qu'une tôle (8), après un découpage de la circonférence sur une machine à plier, est pliée le long de lignes (1d) à plusieurs reprises pour la formation d'une cuvette stabilisatrice, dans lequel une cale (9) est découpée dans la tôle (8) de telle sorte qu'une cuvette concave est formée par la réunion des bords de la cale (9).

13. Procédé selon la revendication précédente, **caractérisé en ce que** la tôle est pliée sur la machine à plier le long de lignes (1c) pour la formation de parts de pied, dans lequel les parts de pied sont pliés à environ 90° de telle sorte que ceux-ci forment chacun un pied lors de l'assemblage des segments (1a).

14. Procédé selon l'une des deux revendications précédentes, **caractérisé en ce que** des perforations (2a) et des ouvertures d'insertion(5) sont pratiquées dans la tôle (8).
